# EUROPEAN PATENT APPLICATION

(11) **EP 4 692 469 A1**
(43) Date of publication of application: **11.02.2026**
(21) Application number: 24825943.4
(22) Date of filing: 19.06.2024
(51) Int. Cl.: E02F 9/20, E02F 3/84, E02F 9/22, G09B 9/04

(54) **OPERATION APPARATUS AND OPERATION SYSTEM**

(30) Priority: 23.06.2023 JP 2023103431
(71) Applicant: KOBELCO CONSTRUCTION MACHINERY CO., LTD., Hiroshima-shi, Hiroshima 731-5161 (JP)
(72) Inventor: SAKAMOTO, Fumiya, Hiroshima-shi, Hiroshima 731-5161 (JP); KISHI, Hiromu, Hiroshima-shi, Hiroshima 731-5161 (JP); NANJO, Takao, Hiroshima-shi, Hiroshima 731-5161 (JP); SHIMAZU, Yasuhiko, Hiroshima-shi, Hiroshima 731-5161 (JP); SEKIZUKA, Ryota, Hiroshima-shi, Hiroshima 731-5161 (JP)
(74) Representative: TBK
(86) International application number: PCT/JP2024/022247
(87) International publication number: WO 2024/262542

(57) **Abstract**

Provided are an operation apparatus (1) allowing a skill learned in a virtual space to be utilized on a real work machine and an operation system (100) provided with the same. The operation apparatus (1) includes an input device allowing a command for moving a work machine (20) to be input thereto and a communication device that transmits information on the command to a simulator (90). The communication device communicates with the simulator (90) so as to allow a virtual work machine (120) in a virtual space provided by the simulator (90) to be operated by use of at least a part of the input device.

## Description

### Technical Field

The present invention relates to an operation apparatus for remotely operating a work machine, and an operation system including the same.

### Background Art

Patent Literature 1 discloses a remote operation apparatus for remotely operating a work machine. The remote operation apparatus is connectable to a work machine, which is the connection target, and the achievement of the connection causes, for example, a wiper to make a motion. This enables a connection condition between the work machine, which is the target of the remote operation, and the remote operation apparatus to be confirmed.

Other than the above operation apparatus, there could be provided an operation apparatus for operating a virtual work machine in a virtual space for simulating work performed by a work machine. However, if respective specifications of the operation of the operation apparatus for operating the virtual work machine and the operation apparatus for remotely operating the real work machine are significantly different from each other, a user cannot perform the remote operation of the real work machine in the same manner as the operation for moving the work machine in the virtual space. This hinders the skill that the user has learned in the virtual space from being utilized for the operation of the real work machine.

### Citation List

### Patent Literature

Patent Literature 1: Japanese Unexamined Patent Publication No. 2022-152338

### Summary of Invention

It is an object of the present invention to provide an operation apparatus allowing a skill acquired in a virtual space to be utilized for a real work machine, and an operation system including the operation apparatus.

Provided is an operation apparatus for remotely operating a work machine. The operation apparatus includes: an input device allowing a command for moving the work machine to be input to the input device by an operation of a user; and a communication device that transmits information on the command that is input to the input device to a simulator. The simulator provides a virtual space containing a virtual work machine that virtually represents the work machine in order to simulate work performed by the work machine. The communication device is configured to communicate with the simulator so as to allow the virtual work machine to be operated by use of at least a part of the input device.

Also provided is an operation system including a work machine, the operation apparatus for remotely operating the work machine, and a simulator. The simulator provides a virtual space containing a virtual work machine which virtually represents the work machine in order to simulate work performed by the work machine. The communication device of the operation apparatus is configured to communicate with the simulator so as to allow the virtual work machine to be operated by use of at least a part of the input device.

### Brief Description of Drawings

FIG. 1 is an overall schematic view of an operation system according to an embodiment of the present invention.
FIG. 2 is a perspective view of an input device constituting an operation apparatus included in the operation system.
FIG. 3 is a front view of an output device of the operation apparatus.
FIG. 4 is a block diagram showing components of the operation system.
FIG. 5 is a flowchart showing a sequence used in the operation apparatus.
FIG. 6 is a flowchart showing before-operation processing included in the sequence.
FIG. 7 is a flowchart of a starting preparation processing included in the before-operation processing.
FIG. 8 is a flowchart of an authentication result confirmation processing included in the before-operation processing.
FIG. 9 is a flowchart showing a starting processing included in the sequence.
FIG. 10 is a flowchart showing an ending processing included in the sequence.
FIG. 11 is a flowchart showing a motion selection processing included in the ending processing.

### Detailed Description

Hereinafter will be described preferred embodiments of the present invention with reference to the drawings.

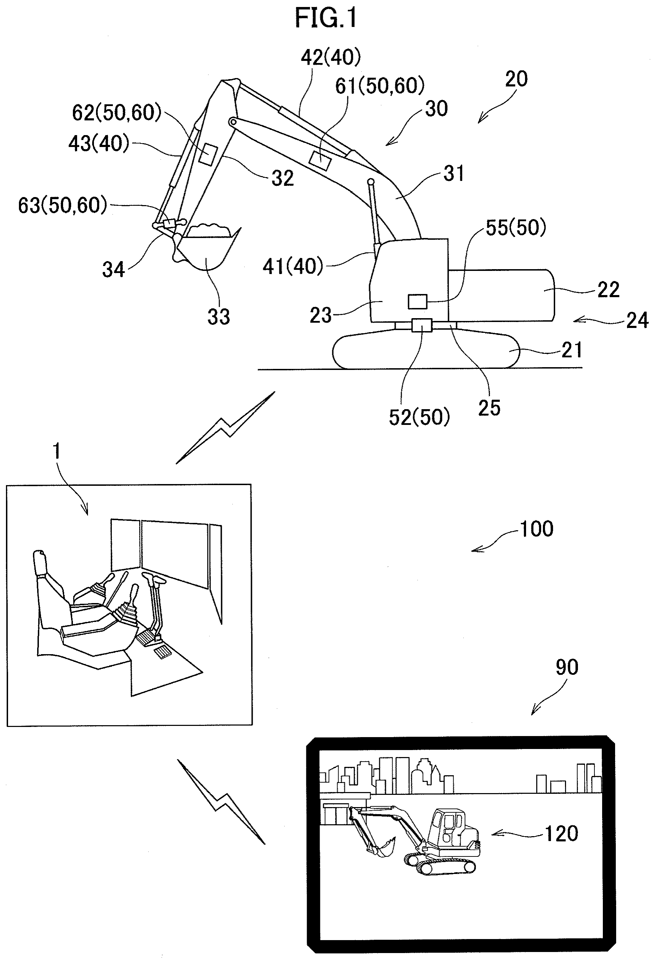

FIG. 1 shows an operation system 100 according to the present embodiment. The operation system 100 includes an operation apparatus 1 and a simulator 90. The operation apparatus 1 enables a plurality of work machines 20 actually existing at a work site or the like to be remotely operated selectively through the operation apparatus 1. For convenience, only one of the plurality of (real) work machines 20 is shown in FIG. 1.

Besides, the operation apparatus 1 enables a virtual work machine 120 contained in the virtual space to be operated through the operation apparatus 1. The virtual space is provided by the simulator 90, which is an operation verification device. The virtual work machine 120 is a machine as which the work machine 20 is virtually represented in the virtual space in order to simulate the work to be performed by the work machine 20. It is also allowable that a plurality of virtual work machines 120 are arranged in the virtual space to be selectively operated.

The real work machine 20 includes an attachment 30 for performing work. The work machine 20 illustrated in FIG. 1 is a hydraulic excavator. The virtual work machine 120, which virtually represents the work machine 20 in order to simulate the work performed by the real work machine 20, has a structure equivalent to that of the real work machine 20.

The real work machine 20 includes the attachment 30, a machine body 24, an attachment 30 and a plurality of cylinders 40, the machine body 24 including a lower traveling body 21 and an upper turning body 22.

The lower traveling body 21 is capable of performing a traveling motion, including, for example, a pair of left and right crawlers. The upper turning body 22 is mounted on the lower traveling body 21 through a turning device 25 capably of turning. The upper turning body 22 includes a cab (operation chamber) 23 forming the front part of the upper turning body 22. The cab 23 may be either a vertical elevator cab or a link-type elevator cab, each of which is vertically moved by a vertical movement mechanism.

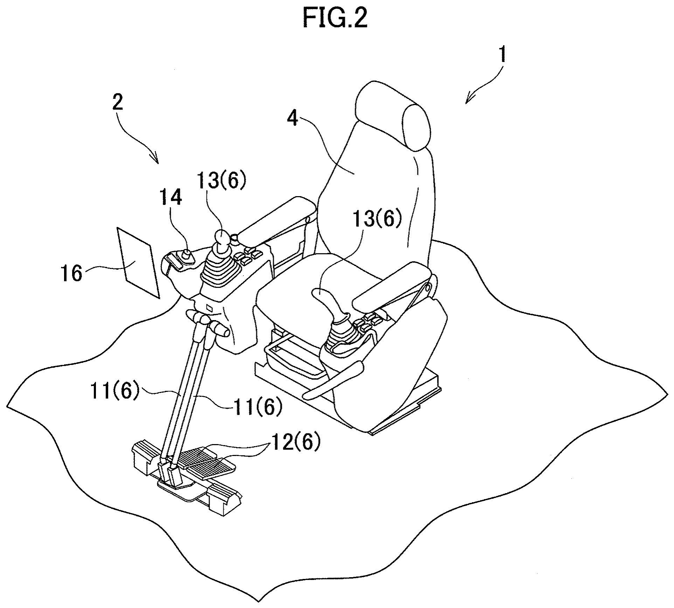

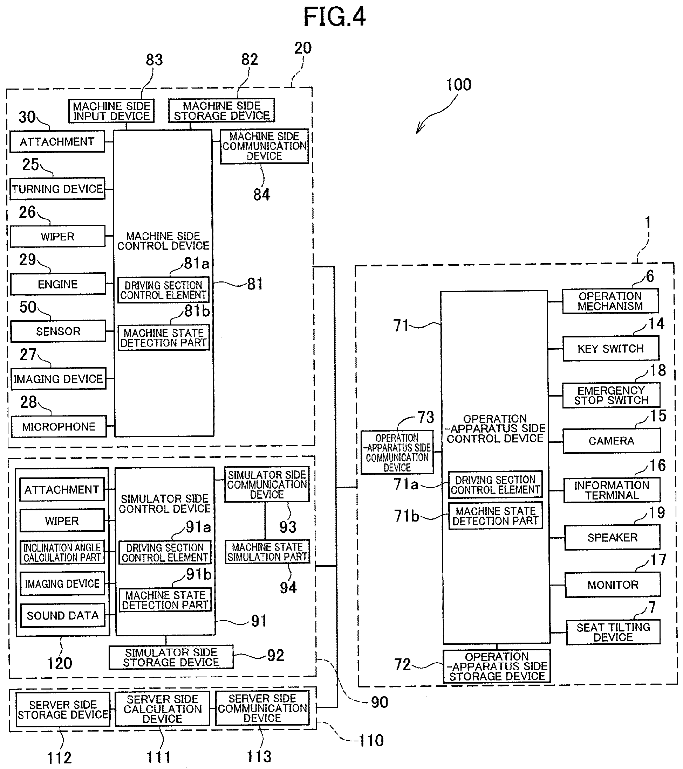

The cab 23 accommodates a seat (operation seat) 4 shown in FIG. 2 and a machine side input device 83 shown in FIG. 4.

The cab 23 includes a non-illustrated front window and a wiper 26 shown in FIG. 4. The wiper 26 is configured to wipe off water droplets adhering to a surface of the front window.

The attachment 30 is attached to the upper turning body 22 capably of vertically rotational movement. The attachment 30 includes a boom 31, an arm 32 and a bucket 33. The boom 31 is attached to the upper turning body 22 capably of rotational movement in a derricking direction (vertical direction). The arm 32 is attached to the boom 31 capably of vertically rotational movement. The bucket 33 is attached to the arm 32 capably of rotational movement in the front-rear direction of the upper turning body 22 to form an end attachment which is the distal end of the attachment 30. The bucket 33 is a part for performing work such as excavation, leveling, and scooping of earth and sand.

The end attachment is not limited to the bucket 33. The end attachment may be, for example, either a lifting magnet for holding iron scrap or the like, or a nibbler for crushing an object or the like.

The plurality of cylinders 40 are arranged capably of hydraulically rotationally moving the boom 31, the arm 32, and the bucket 33 of the attachment 30, respectively Each of the cylinders 40 is an expandable hydraulic cylinder. Each of the cylinders 40, alternatively, may be an electric cylinder.

The plurality of cylinders 40 include a boom cylinder 41, an arm cylinder 42 and a bucket cylinder 43.

The boom cylinder 41 rotationally moves the boom 31 with respect to the upper turning body 22. The boom cylinder 41 has a proximal end and a distal end opposite to the proximal end. The proximal end is rotatably connected to the upper turning body 22. The distal end is rotatably connected to the boom 31.

The arm cylinder 42 rotationally moves the arm 32 with respect to the boom 31. The arm cylinder 42 has a proximal end and a distal end opposite thereto. The proximal end is rotatably connected to the boom 31. The distal end is rotatably connected to the arm 32.

The bucket cylinder 43 rotationally moves the bucket 33 with respect to the arm 32. The bucket cylinder 43 has a proximal end and a distal end opposite thereto. The proximal end is rotatably connected to the arm 32. The distal end is rotatably connected to a link member 34, which is rotatably connected to the bucket 33.

The work machine 20 further includes a plurality of sensors 50. The plurality of sensors 50 include a turning angle sensor 52, a plurality of oblique angle sensors 60 and an inclination angle sensor 55.

The turning angle sensor 52 detects a turning angle of the upper turning body 22 with respect to the lower traveling body 21. The turning angle sensor 52 is, for example, an encoder, a resolver, or a gyro sensor. In the present embodiment, the turning angle of the upper turning body 22 in the posture where the front side of the upper turning body 22 coincides with the front side of the lower traveling body 21 is 0°.

The plurality of oblique angle sensors 60 are arranged to detect the posture of the attachment 30. The oblique angle sensors 60 includes a boom oblique angle sensor 61, an arm oblique angle sensor 62 and a bucket oblique angle sensor 63.

The boom oblique angle sensor 61 is attached to the boom 31 to detect the posture of the boom 31. The boom oblique angle sensor 61 is a sensor that acquires an oblique angle of the boom 31 with respect to a horizontal line, for example, being an inclination (acceleration) sensor. The boom oblique angle sensor 61 may be, alternatively, either a rotation angle sensor that detects the rotation angle of the boom 31 around a boom foot pin in the proximal end of the boom 31 or a stroke sensor that detects the stroke of the boom cylinder 41 in the expansion and contraction directions.

The arm oblique angle sensor 62 is attached to the arm 32 to detect the posture of the arm 32. The arm oblique angle sensor 62 is a sensor that acquires an oblique angle of the arm 32 with respect to a horizontal line, for example, being an inclination (acceleration) sensor. The arm oblique angle sensor 62 may be, alternatively, either a rotation angle sensor that detects the rotation angle of the arm 32 around an arm connection pin in the proximal end of the arm 32 or a stroke sensor that detects the stroke of the arm cylinder 42 in the expansion and contraction directions.

The bucket oblique angle sensor 63 is attached to the link member 34 to detect the posture of the bucket 33. The bucket oblique angle sensor 63 is a sensor that acquires an oblique angle of the bucket 33 with respect to a horizontal line, for example, being an inclination (acceleration) sensor. The bucket oblique angle sensor 63, alternatively, may be either a rotation angle sensor that detects the rotation angle of the bucket 33 around a bucket connection pin in the distal end of the bucket 33 or a stroke sensor that detects the stroke of the bucket cylinder 43 in the expansion and contraction directions.

The inclination angle sensor 55 is attached to the upper turning body 22 to detect an inclination angle of the upper turning body 22 with respect to a horizontal surface. The inclination angle sensor 55 may be, for example, either an inclination (acceleration) sensor or an IMU (Inertial Measurement Unit).

The work machine 20 further includes an imaging device 27 shown in FIG. 4. The imaging device 27 includes at least a part of a camera installed in the cab 23, a camera mounted on the attachment 30, a rear camera mounted on the upper turning body 22 and a circumference camera installed in the machine body 24. The imaging device 27, alternatively, may be disposed at an arbitrary position in the virtual space. In the virtual space, there can be installed a plurality of imaging devices 27.

The operation apparatus 1 includes an input device 2 shown in FIG. 2 and the seat 4.

To the input device 2 is input a command for moving the work machine 20 through an operation by a user of the operation apparatus 1. The input device 2 includes an operation mechanism 6 that allows an operation for inputting the command to be applied to the operation mechanism 6. The operation mechanism 6 includes a pair of left and right travelling levers 11 and a pair of left and right traveling pedals 12. The traveling lever 11 and the traveling pedal 12 are disposed in front of the seat 4, and allow an operation for designating a traveling direction and a traveling speed of the crawler of the lower traveling body 21 to be applied to the traveling lever 11 and the traveling pedal 12, respectively.

The operation mechanism 6 further includes a pair of left and right operation levers 13. The pair of operation levers 13 are disposed on the left and right sides of the seat 4, respectively. The pair of operation levers 13 allow an operation for inputting a command to move the attachment 30 to the operation lever 13.

The operation mechanism 6 may further include an option operation lever. To the option operation lever is applied an operation for inputting a command for moving a special attachment such as a nibbler.

The input device 2 further includes a key switch 14. The key switch 14 allows a key to be inserted into the key switch 14 and allows the inserted key to be rotated so as to be positioned at a key-on position, a key start position and the key-off position, selectively. The operation of positioning the key in the key-on position causes a command for bringing an electric system into a connected state to be input. The operation of positioning the key at the key start position causes a command for starting the engine 29 shown in FIG. 4 to be input. The operation of positioning the key in the key-off position causes a command for stopping the engine 29 to be input.

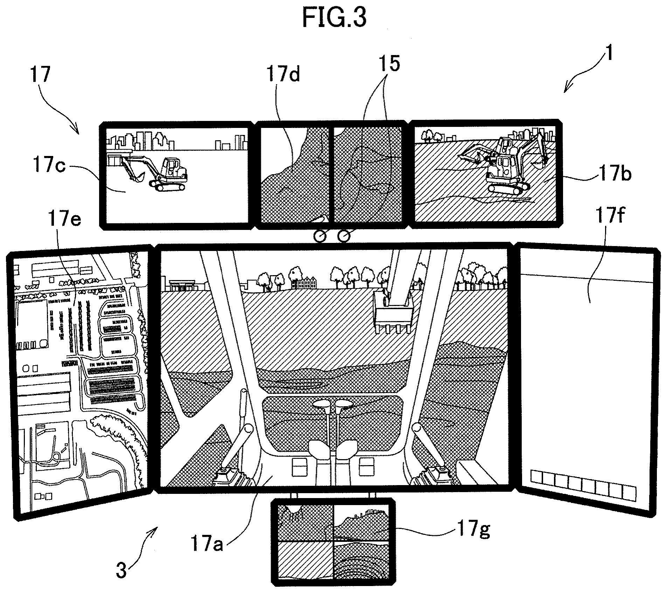

The input device 2 further includes a camera 15 shown in FIG. 3. The camera 15 captures an image of a face or the like of a user sitting on the seat 4.

The input device 2 further includes an information terminal 16. The information terminal 16 can be disposed frontward of the seat 4. The information terminal 16 is, for example, a tablet or a smartphone. The information terminal 16 includes a display and a touch panel. The information terminal 16 can also function as a component of the output device 3 shown in FIG. 3, etc.

The input device 2 further includes an emergency stop switch 18 shown in FIG. 4 and other switches not graphically shown. To the emergency stop switch 18 is applied an operation to input a command for emergency stop of the work machine 20. The other switches include a switch attached to the operation lever 13, a horn sounding switch, a switch for changing the direction of the camera, a lever lock switch, a work mode selection switch, a wiper operation switch and a switch for turning on and off a light.

The operation apparatus 1 further includes the output device 3 shown in FIG. 3. The output device 3 includes a plurality of monitors 17, which includes, in the example shown in FIG. 3, a first monitor 17a, a second monitor 17b, a third monitor 17c, a fourth monitor 17d, a fifth monitor 17e, a sixth monitor 17f and a seventh monitor 17g. The first monitor 17a is a main monitor that displays an image provided by a camera installed in the cab 23. The second and third monitors 17b, 17c are disposed on the upper right side and the upper left side of the first monitor 17a, respectively, and display an image provided by a bird's-eye view camera set at the work site. The fourth monitor 17d is disposed above the center of the first monitor 17a and between the second and third monitors 17b and 17c, and displays an image provided by the camera mounted on the attachment 30 and an image provided by the rear camera mounted on the upper turning body 22. The fifth monitor 17e is disposed on the left side of the first monitor 17a, and displays an analysis report of a work status and a status of a work site, and the like. The sixth monitor 17f is disposed on the right side of the first monitor 17a and displays information on the work-machine-20 side. The seventh monitor 17g is disposed below the center of the first monitor 17a and displays an image provided by the circumference camera installed in the machine body 24. The number of monitors included in the output device 3 or the display content thereof are not limited.

In the case where a plurality of imaging devices 27 are arranged in the virtual space, the image captured by any of the imaging devices 27 can be displayed on one of the plurality of monitors 17. As the monitor to output the captured image by the imaging device 27, one or more monitor 17 can be designated from among the plurality of monitors 17. In the virtual space provided by the simulator 90, one or a plurality of imaging devices 27 can be freely arranged. This makes it possible to make the imaging device 27 capture an image from a viewpoint or view field which is difficult to confirm when operating the work machine, and to promote the skill of the operation of the work machine by the user by referring to the image capturing.

The output device 3 further includes a speaker 19 shown in FIG. 4. The speaker 19 outputs sound collected by a microphone mounted on the work machine 20.

The output device 3 further includes a seat tilting device 7 shown in FIG. 4. The seat tilting device 7 moves the seat 4 so as to change the inclination angle of the seat 4 to a horizontal plane. The seat tilting device 7 enables the inclination of the upper turning body 22 detected by the inclination angle sensor 55 to be reproduced by the seat 4.

The output device 3 further includes a plurality of non-illustrated display devices. The plurality of display devices display, for example, a lighting state of the warning lamp, a lever lock state, a fuel level, a fuel consumption amount, an engine water temperature, a urea tank level, soot accumulation information as to a DPF, an operation time and the like, respectively.

The simulator 90 is composed of a personal computer or the like. The simulator 90 executes simulation software to thereby provide the virtual space and make the virtual work machine 120 perform, in the virtual space, a motion for simulating work performed by the real work machine 20. The simulator 90 according to the present embodiment is separated from the operation apparatus 1.

As shown in FIG. 4, the operation apparatus 1 includes an operation-apparatus side control device 71, an operation-apparatus side storage device 72 and an operation-apparatus side communication device 73, which devices constitute a communication device that transmits information on the command which is input to the input device 2.

The operation-apparatus side control device 71 includes a driving section control element 71a and a machine state detection part 71b. The driving section control element 71a controls the motion of an operation target machine selected from the real work machine 20 and the virtual work machine 120. The machine state detection part 71b detects the state of the operation target machine. The operation target machine is a work machine selected, as a target to be operated by the operation apparatus 1, from the real work machine 20 and the virtual work machine 120.

To the operation-apparatus side control device 71 is input information including a command signal from the input device 2 including the operation mechanism 6, the key switch 14, the emergency stop switch 18, the camera 15, the information terminal 16, etc. The operation-apparatus side communication device 73 transmits the information that is input from the input device 2, that is, information on the command signal, to the outside. The operation-apparatus side communication device 73 receives various types of information from the outside. The operation-apparatus side communication device 73 includes an image decoder and a voice decoder. The operation-apparatus side control device 71 inputs information from the outside to the information terminal 16, the speaker 19, the monitor 17 and the seat tilting device 7, which are included in the output device 3.

The operation-apparatus side communication device 73 is capable of communicatiing with each of the real work machine 20 and the server 110.

The operation apparatus 1 allows a user of the operation apparatus 1 to select the real work machine 20 as a connection target to be connected with the operation apparatus 1. For the selection of the connection target machine is used the information terminal 16 shown in FIG. 2. When the real work machine 20 is selected as the connection target, the operation-apparatus side communication device 73 of the operation apparatus 1 establishes communication with use of a below-described identifier between the operation-apparatus side communication device 73 and the real work machine 20, thereby allowing the real work machine 20 to be remotely operated by use of the input device 2 and the output device 3 of the operation apparatus 1.

When the real work machine 20 is remotely operated through the operation apparatus 1, the machine state detection part 71b makes the monitor 17 of the output device 3 display an image captured by the camera provided in the work machine 20, and makes the speaker 19 of the output device 3 output sound collected by the microphone 28 provided in the work machine 20. Besides, the machine state detection part 71b makes the output device 3 output the information given from the real work machine 20.

As shown in FIG. 4, the work machine 20 includes a machine side control device 81, a machine side storage device 82, a machine side input device 83 and a machine side communication device 84.

The machine side control device 81 includes a driving section control element 81a and a machine state detection part 81b. The driving section control element 81a controls the motion of the real work machine 20. The machine state detection part 81b detects the state of the real work machine 20.

To the machine state detection part 81b is input information detected by the plurality of sensors 50. Specifically, to the machine state detection part 81b is input the information detected by the turning angle sensor 52, that is, the information on the turning angle (posture) of the upper turning body 22 with respect to the lower traveling body 21. To the machine state detection part 81b is input the information detected by the boom oblique angle sensor 61, that is, the information on the posture of the boom 31. To the machine state detection part 81b is input the information detected by the arm oblique angle sensor 62, that is, the information on the posture of the arm 32. To the machine state detection part 81b is input the information detected by the bucket oblique angle sensor 63, that is, the information on the posture of the bucket 33. To the machine state detection part 81b is input the information detected by the inclination angle sensor 55, that is, the information on the inclination of the upper turning body 22.

The driving section control element 81a controls the motions of the attachment 30 and the turning device 25 based on the information detected by the plurality of sensors 50 and the information input from the machine side input device 83.

The machine side communication device 84 transmits information detected by the plurality of sensors 50 to the outside. The machine side communication device 84 receives information from the outside. The machine side communication device 84 includes an image encoder and a voice encoder. When the work machine 20 is remotely operated, the driving section control element 81a controls the motions of the attachment 30 and the turning device 25 based on the information from the outside.

For the remote operation of the real work machine 20 by the operation apparatus 1 is used a predetermined sequence. The sequence is a computer program, executed through mutual communication between the operation-apparatus side control device 71 of the operation apparatus 1 and the machine side control device 81 of the work machine 20. The use of the sequence between the operation apparatus 1 and the work machine 20 allows the real work machine 20 to be operated by use of the operation apparatus 1. Details of the sequence will be described later.

The machine state detection part 71b transmits a specific signal related to a device included in the work machine 20 to the work machine 20 at a predetermined timing. In the case where the device included in the work machine 20 is the engine 29, the specific signal is, for example, a request signal for requesting information about the operation state of the engine 29. When the machine state detection part 81b of the work machine 20 receives the request signal from the operation apparatus 1, the machine state detection part 81b of the work machine 20 transmits a response signal corresponding to the state of the device, as a response to the request signal, to the operation apparatus 1. The response signal transmitted from the work machine 20 to the operation apparatus 1 is, for example, a signal indicating that the engine 29 has started or a signal indicating that the operation of the engine 29 is normal. For example, when the operation of the engine 29 is normal, the machine state detection part 81b of the work machine 20 transmits a signal indicating that the operation of the engine 29 is normal to the operation apparatus 1. In contrast, when the operation state of the engine 29 is abnormal, the machine state detection part 81b of the work machine 20 transmits a signal indicating that the operation of the engine 29 is abnormal to the operation apparatus 1. Such transmission of the response signal to the request signal from the operation apparatus 1 allows a user of the operation apparatus 1 to confirm the operation state of the operation system 100.

The operation-apparatus side communication device 73 of the operation apparatus 1 is further capable of communicating with the simulator 90.

The operation apparatus 1 allows a user of the operation apparatus 1 to select the simulator 90 as a connection target of the operation apparatus 1. The operation apparatus 1, thus, enables the user to make selection between the remote operation of the real work machine 20 and the operation of the virtual work machine 120, that is, to make selection of the connection target machine between the real work machine 20 and the virtual work machine 120. When the simulator 90 is selected as the connection target, the operation-apparatus side communication device 73 of the operation apparatus 1 establishes communication with use of the identifier between the operation-apparatus side communication device 73 and the simulator 90, thereby allowing the virtual work machine 120 shown in FIG. 1 to be operated by use of at least a part of the input device 2 and the output device 3 of the operation apparatus 1. In the present embodiment, all of the input device 2 and the output device 3 are used for the operation of the virtual work machine 120. The operation, however, is also allowable to be performed without use of a part of the input device 2 or a part of the output device 3.

As shown in FIG. 4, the simulator 90 includes a simulator side control device 91, a simulator side storage device 92, a simulator side communication device 93 and a machine state simulation part 94.

The simulator side control device 91 includes a driving section control element 91a and a machine state detection part 91b. The driving section control element 91a controls the motion of the virtual work machine 120 in the virtual space so as to simulate the work performed by the work machine 20. The machine state detection part 91b detects the state of the virtual work machine 120.

The simulator side communication device 93 transmits information on the virtual work machine 120 actuated by the driving section control element 91a to the outside. The simulator side communication device 93 receives information from the outside. The simulator side communication device 93 includes an image encoder and a voice encoder. The driving section control element 91a makes the virtual work machine 120 make a motion in the virtual space based on information from the outside. When the operation of the virtual work machine 120 in the virtual space is performed by the operation apparatus 1, the driving section control element 91a makes the virtual work machine 120, which is the operation target machine, make a motion based on the information transmitted from the operation apparatus 1.

When the virtual work machine 120 is operated by use of the operation apparatus 1, the machine state detection part 71b of the operation apparatus 1 makes the monitor 17 of the output device 3 display the image captured by the imaging device 27 disposed on the virtual space, and makes the speaker of the output device 3 output sound data generated in the virtual space as a voice. Besides, the machine state detection part 71b makes the output device 3 output information sent from the simulator 90.

For the operation of the virtual work machine 120 by the operation apparatus 1, used is the same sequence as the sequence used in the remote operation of the real work machine 20 provided by the operation apparatus 1. The sequence is executed through mutual communication between the operation-apparatus side control device 71 of the operation apparatus 1 and the simulator side control device 91 of the simulator 90. In other words, the same sequence as the sequence used between the real work machine 20 and the operation apparatus 1 is used between the operation apparatus 1 and the simulator 90, allowing the virtual work machine 120 to be operated by the operation apparatus 1.

The operation apparatus 1, thus, enables not only the remote operation of the real work machine 20 but also the operation of the virtual work machine 120 to be performed through the operation apparatus 1, allowing a user to operate the virtual work machine 120 with the same operation or almost the same operation as the remote operation of the real work machine 20. This allows, for example, the user to learn the procedure and/or method of the remote operation of the real work machine 20 through the operation of the virtual work machine 120. This enables the user to remotely operate the real work machine 20 to actually perform predetermined work after practicing the predetermined work through the operation of the virtual work machine 120. The user, thus, is allowed to utilize the skill acquired in the virtual space for the operation of the real work machine 20.

The communication device including the operation-apparatus side communication device 73 of the operation apparatus 1 communicates with each of the real work machine 20 and the simulator 90 so as to allow a user to select, as an operation by use of the operation apparatus 1, between a remote operation of the real work machine 20 and an operation of the virtual work machine 120. This enables the user both to select the operation of the virtual work machine 120 to perform practice or the like for operation of the real work machine 20 and to select the remote operation of the real work machine 20 to perform actual work or the like.

Using the same sequence as the sequence used between the work machine 20 and the operation apparatus 1 between the operation apparatus 1 and the simulator 90, that is, the coincidence of the sequence for the remote operation of the operation apparatus 1 with the sequence for the operation of the virtual work machine 120, enables the operation of the virtual work machine 120 to be performed in the same or substantially the same procedure (sequence) as the procedure (sequence) of the remote operation of the real work machine 20. This enables, for example, the user of the operation apparatus 1 to learn the procedure of the remote operation of the real work machine 20 through the operation of the virtual work machine 120. Hence, the user can actually remotely operate the real work machine 20 in a predetermined procedure after acquiring the predetermined procedure through the operation of the virtual work machine 120. The user, thus, can utilize the skill acquired in the virtual space for the operation of the real work machine 20.

The server 110 includes a server side control device 111, a server side storage device 112 and a server side communication device 113.

The server side storage device 112 stores a plurality of the identifiers. The plurality of identifiers are, for example, IP addresses, for identifying each of the operation apparatus 1, the real work machine 20 and the virtual work machine 120 on a network. The plurality of identifiers are assigned to a plurality of devices included in the operation apparatus 1 (for example, the operation-apparatus side communication device 73, the monitor 17, the speaker 19, etc.), respectively. The plurality of identifiers are also assigned to a plurality of devices included in the work machines 20 and 120 (for example, the communication device, the imaging device 27, the microphone 28, and the like), respectively. By use of the identifier, the communication between the operation apparatus 1 and the real work machine 20 or the communication between the operation apparatus 1 and the simulator 90 is established.

The simulation software may be executed by the server 110. In this case, also, the work performed by the work machine 20 is simulated through the motion of the virtual work machine 120 in the virtual space.

As described above, the operation apparatus 1 according to the present embodiment is separated from the simulator 90 that simulates the work performed by the work machine 20 through the movement of the virtual work machine 120 in the virtual space. The simulator 90, however, may be configured integrally with the operation apparatus 1. In this case, the operation-apparatus side control device 71 and the operation-apparatus side storage device 72 of the operation apparatus 1 execute the simulation software to thereby move the virtual work machine 120 in the virtual space to simulate the work performed by the real work machine 20.

In the case where the operation apparatus 1 and the simulator 90 are integrated with each other, that is, in the case where the work by the work machine 20 is simulated by the operation-apparatus side control device 71 and the operation-apparatus side storage device 72 of the operation apparatus 1 shown in FIG. 4, the sequence used for the remote operation of the real work machine 20 and the sequence used for the operation of the virtual work machine 120 have to be different. The reason is as follows: when the operation apparatus 1 and the simulator 90 are separated from each other, the communication connection state of the operation apparatus 1 and the simulator 90 can be established by the applications of mutual identifiers; in contrast, when the operation apparatus 1 and the simulator 90 are integrated, the communication connection state with use of the above-described identifier cannot be established. In other words, the separation of the operation apparatus 1 from the simulator 90 enables the operation apparatus 1 and the simulator 90 to establish the communication connection state by applying mutual identifiers, thereby enabling the sequence used for the remote operation of the real work machine 20 to be the same as the sequence used for the operation of the virtual work machine 120 as in the present embodiment. Such coincidence of the sequences with each other makes it possible to operate the virtual work machine 120 by use of the operation apparatus 1 as it is with no change of the operation apparatus 1. Besides, as compared with a case where the work by the virtual work machine 120 is simulatively executed by the computer mounted on the operation apparatus 1, the load of the processing of the computer is reduced.

In addition, the use of the same sequence as the sequence of the remote operation of the real work machine 20 for the operation of the virtual work machine 120 eliminates the necessity of changing the sequence for the operation of the virtual work machine 120, thereby allowing the operation of the virtual work machine 120 to be more easily performed by use of the operation apparatus 1 as it is with no change of the operation apparatus 1.

The machine state detection part 71b of the operation apparatus 1 transmits a specific signal related to a device included in the work machine to the simulator 90 at a predetermined timing. In the case where the device is the engine 29, the specific signal is, for example, a request signal requesting information on the operation state of the engine 29. When receiving the request signal from the operation apparatus 1, the machine state simulation part 94 of the simulator 90 transmits a simulation response signal corresponding to the response signal to the operation apparatus 1. Such transmission of the simulation response signal to the request signal from the operation apparatus 1 enables a user of the operation apparatus 1 to confirm the operation state of the operation system 100.

The machine state simulation part 94 of the simulator 90, which has no actual engine, transmits, as the simulation response signal, a response signal indicating that the operation of the engine 29 is normal or a response signal indicating that the operation of the engine 29 is abnormal to the operation apparatus 1. When the simulated response signal is a response signal indicating that the operation of the engine 29 is normal, the operation on the simulator 90 is allowed to be continued. In contrast, when the simulated response signal is a response signal indicating that the operation of the engine 29 is abnormal, the abnormal state of the virtual work machine 120 can be created in a pseudo manner. This enables a user to have simulated experience of the abnormal state of the work machine and to learn the method to countermeasure the abnormality.

In the present embodiment, as shown in FIG. 4, the machine state simulation part 94 and the simulator side control device 91 are separated from each other. Hence, the transmission and reception of the request signal and the simulated response signal does not affect the control of the work of the virtual work machine 120 by the simulator side control device 91, that is, the simulation of the work by the work machine 20. The machine state simulation part 94, alternatively, may be a part of the simulator side control device 91.

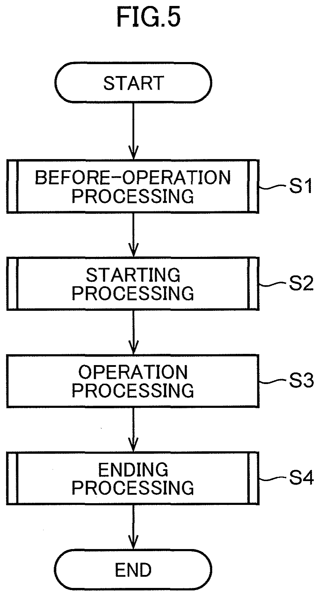

Next will be described the action of the operation system 100 with reference to FIG. 5. FIG. 5 is a flowchart showing the sequence, which is performed through mutual communication between the operation-apparatus side control device 71 of the operation apparatus 1 and the machine side control device 81 of the work machine 20 or mutual communication between the operation-apparatus side control device 71 of the operation apparatus 1 and the simulator side control device 91 of the simulator 90. As described above, the same sequence is used for both the remote operation of the real work machine 20 by the operation apparatus 1 and the operation of the virtual work machine 120 by the operation apparatus 1.

The operation system 100 initially executes the before-operation processing (step S1).

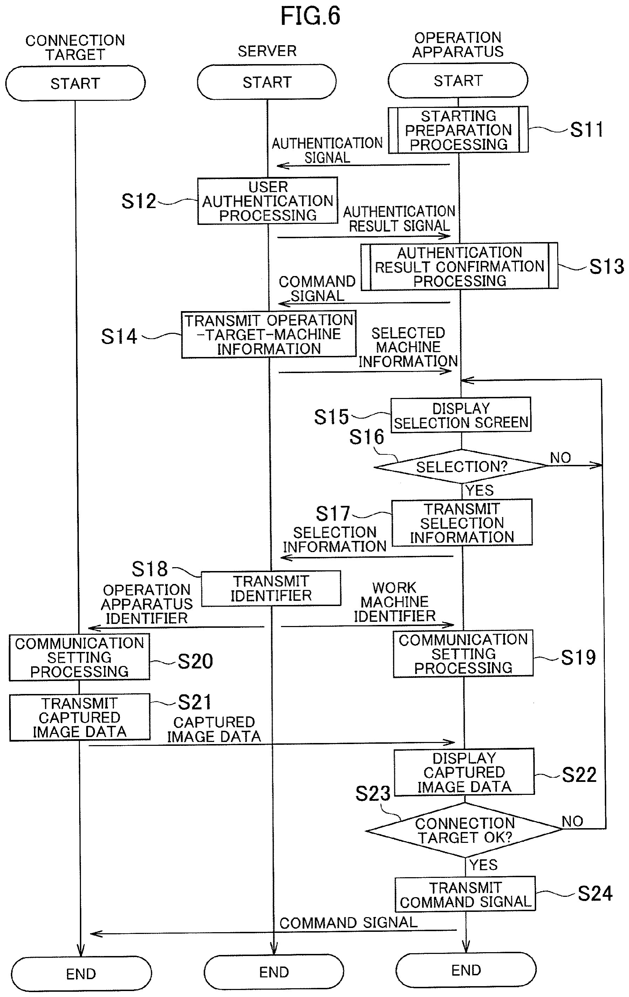

FIG. 6 is a flowchart showing the before-operation processing. In the before-operation processing, the operation-apparatus side control device 71 of the operation apparatus 1 first executes a starting preparation processing (step S11).

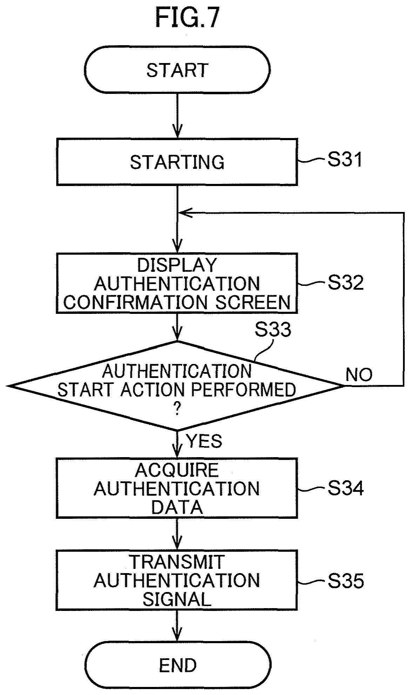

FIG. 7 is a flowchart showing the starting preparation processing. In the starting preparation process, first, the operation apparatus 1 is started (step S31). Specifically, an ON operation is applied to a non-illustrated power button of the operation apparatus 1 by the user, whereby the operation apparatus 1 is started. Next, the operation-apparatus side control device 71 of the operation apparatus 1 makes the information terminal 16 display an authentication confirmation screen (step S32). The authentication confirmation screen contains a message "Execute authentication ?" and an authentication button.

Next, the operation-apparatus side control device 71 judges whether or not the authentication start action has been performed (step S33). When an operation is applied to the authentication button by the user, the authentication start action is performed. During judging that the authentication start action is not performed (NO in step S33), the operation-apparatus side control device 71 continues the display of the authentication confirmation screen (step S32). When judging that the authentication start action has been performed (YES in step S33), the operation-apparatus side control device 71 acquires authentication data (step S34). The authentication data is data for identifying an individual user, and is acquired, for example, through the camera 15. The operation-apparatus side control device 71, thereafter, transmits an authentication signal including the authentication data to the server 110 (step S35), ending the starting preparation processing.

Upon receiving the authentication signal, the server 110 performs user authentication processing (step S12 shown in FIG. 6). The user authentication processing includes user authentication based on a comparison of the authentication data included in the authentication signal with authentication data registered in the server 110, and the transmission of an authentication result signal indicating the result of the user authentication to the operation apparatus 1.

The operation-apparatus side control device 71 of the operation apparatus 1 executes an authentication result confirmation processing based on the authentication result signal (step S13 shown in FIG. 6).

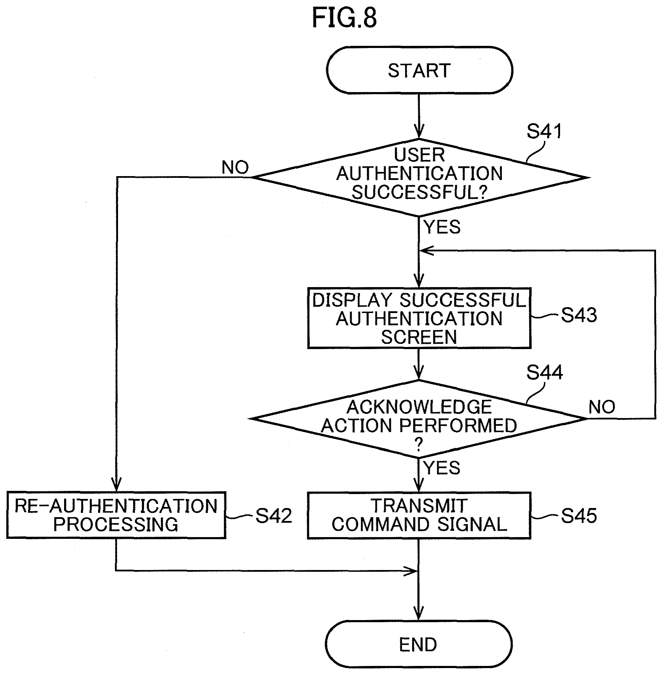

FIG. 8 is a flowchart showing the authentication result confirmation processing. First, the operation-apparatus side control device 71 judges whether or not the user authentication is successful (step S41). The judgment is performed based on the authentication result data included in the authentication result signal. When judging that the user authentication has failed (NO in step S41), the operation-apparatus side control device 71 executes re-authentication processing (step S42). The re-authentication processing includes, for example, making the information terminal 16 display a pattern indicating that the user authentication has failed and a re-authentication button for performing re-authentication. When an operation is applied to the re-authentication button by the user, the same process as the above-described starting preparation processing (steps S32 to S35 shown in FIG. 7) is executed.

When judging that the user authentication is successful (YES in step S41), the operation-apparatus side control device 71 makes the information terminal 16 display successful authentication screen (step S43). The successful authentication screen contains a character of "face authentication", a face character symbol indicating that face authentication is successful, and an OK button.

Next, the operation-apparatus side control device 71 judges whether or not the acknowledge action has been performed (step S44). Specifically, the operation-apparatus side control device 71 judges that the acknowledge action has been performed when an operation is applied to the OK button on the successful authentication screen by a user, whereas judges that the acknowledge action has not been performed in other cases. When judging that the acknowledge action has not been performed (NO in step S44), the operation-apparatus side control device 71 continues the display of the successful authentication screen (step S43). When judging that the acknowledge action has been performed (YES in step S44), the operation-apparatus side control device 71 transmits a command signal to the server 110 (step S45), ending the authentication result confirmation processing.

Upon receiving the command signal, the server 110 transmits information about the operation target machine to the operation apparatus 1 (step S14 shown in FIG. 6). As described above, the operation target machine is the work machine that is selected as the operation target of the operation apparatus 1. As the operation target machine, selected is, for example, the real work machine 20 or the virtual work machine 120, each of which is present in a work area Aw among a plurality of work areas and includes the bucket 33. The real work machine 20 includes position detection means such as a GNSS; by the upload of the position information of the real work machine 20 acquired by the position detection means and the specification information to the server 110 via the network, the real work machine 20 is registered in the server 110 as the operation target machine.

When receiving information about the operation target machine from the server 110, the operation-apparatus side control device 71 of the operation apparatus 1 makes the information terminal 16 display a selection screen (step S15 shown in FIG. 6). The selection screen contains a plurality of machine selection buttons for selection of a selected target machine by a user from a plurality of work machines, namely, machine selection, and a return button for returning to a previous screen.

Next, the operation-apparatus side control device 71 judges whether or not the selection of the operation target machine has been performed (step S16). The operation-apparatus side control device 71 judges that the machine selection has been performed when an operation is applied to any one of the plurality of machine selection buttons by a user, and judges that the machine selection has not been performed otherwise. Until judging that the machine selection has been performed (NO in step S16), the operation-apparatus side control device 71 continues the display of the selection screen (step S15). When judging that the machine selection has been performed (YES in step S16), the operation-apparatus side control device 71 transmits selection information, which is information about the machine selection, to the server 110 (step S17).

Upon receiving the selection information, the server 110 transmits the identifier of the selected work machine, i.e., the operation target machine (step S18). Preferably, the server 110 transmits the identifier to both the operation apparatus 1 and the connection target (the work machine 20 or the simulator 90). When receiving the identifier, the operation-apparatus side control device 71 of the operation apparatus 1 executes communication setting processing (step S19). The communication setting processing involves the application of various communication setting information such as an IP address of the operation target machine to the operation apparatus 1.

Similarly, when receiving the identifier of the operation apparatus 1, the connection target executes the communication setting processing (step S20). The communication setting processing involves the application of communication setting information including an IP address of the operation apparatus 1 or the like to the connection target. This causes a communication connection state between the operation apparatus 1 and the connection target to be established, allowing communication to be made between the operation apparatus 1 and the connection target.

The connection target transmits the captured image data captured by the imaging device 27 to the operation apparatus 1 (step S21). The operation-apparatus side control device 71 of the operation apparatus 1 makes the monitor 17 display the received captured image data as an image (step S22). Then, the operation-apparatus side control device 71 judges whether or not an input for the approval of the connection target has been performed (step S23). The approval can be performed based on the image displayed on the monitor 17. The user performs an input for approval or disapproval of the connection target to the information terminal 16. When judging that the input for the disapproval of the connection target has been performed (NO in step S23), the operation-apparatus side control device 71 re-executes the processing of step S15 and the subsequent steps. When judging that the input for approval of the connection target has been performed (YES in step S23), the operation-apparatus side control device 71 transmits a command signal to the connection target through the operation-apparatus side communication device 73 (step S24), ending the before-operation processing (step S1 shown in FIG. 1).

Next, the operation system 100 executes the starting processing shown in FIG. 5 (step S2).

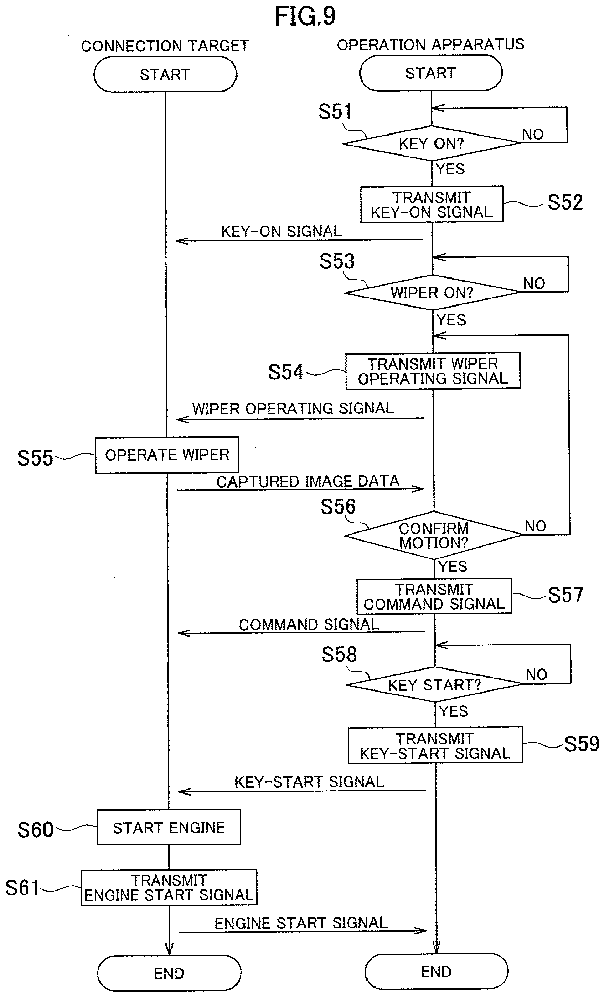

FIG. 9 is a flowchart showing the starting processing. In the starting processing, the operation-apparatus side control device 71 of the operation apparatus 1 first judges whether or not a key-on is performed (step S51). The key-on is an operation of rotating the key inserted into the key switch 14 shown in FIG. 2 to the key-on position in order to input a command for bringing the electric system into connection state. At the point in time when judging that the key-on has been performed (YES in step S51), the operation-apparatus side control device 71 transmits a key-on signal to the connection target through the operation-apparatus side communication device 73 (step S52).

Next, the operation-apparatus side control device 71 judges whether or not wiper-on is performed (step S53). The wiper-on is an operation applied to the wiper operation button displayed on the information terminal 16 in order to input a command for moving the wiper 26. At the point in time when judging that the wiper-on has been performed (YES in step S53), the operation-apparatus side control device 71 transmits a wiper operating signal to the connection target through the operation-apparatus side communication device 73 (step S54).

Upon receiving the wiper operating signal, the connection target operates the wiper 26 (step S55). When the connection target is the real work machine 20, the actual wiper 26 is operated. On the other hand, when the connection target is the simulator 90, that is, when the operation target machine is the virtual work machine 120, an image in which the wiper 26 is operating is displayed on the first monitor (main monitor) 17a shown in FIG. 3, and the image is transmitted to the operation apparatus 1 as the captured image data. The image enables a user to confirm that the wiper 26 has been operated and grasp the connection state between the connection target and the operation apparatus 1.

The operation-apparatus side control device 71 judges whether or not the motion of the wiper 26 has been confirmed (step S56). Specifically, the operation-apparatus side control device 71 judges that the motion of the wiper 26 has been confirmed when an operation by a user is applied to the confirmation button displayed on the information terminal 16, and judges that the motion of the wiper 26 has not been confirmed otherwise. When judging that the motion of the wiper 26 has not been confirmed (NO in step S56), the operation-apparatus side control device 71 repeats the transmission of the wiper operating signal to the connection target through the operation-apparatus side communication device 73 (step S54). If the wiper 26 is not moved despite the repetition of the transmission of the wiper operating signal, the processing to be performed by the operation-apparatus side control device 71 is returned to step S15 of the before-operation processing shown in FIG. 6.

When judging that the motion of the wiper 26 has been confirmed (YES in step S56), the operation-apparatus side control device 71 transmits a command signal to the connection target through the operation-apparatus side communication device 73 (step S57).

Next, the operation-apparatus side control device 71 judges whether or not a key-start has been performed (step S58). The key-start is an operation of rotating the key inserted into the key switch 14 shown in FIG. 2 to the key start position in order to input a command for starting the engine 29. At the point in time when judging that the key start has been performed (YES in step S58), the operation-apparatus side control device 71 transmits a key-start signal to the connection target through the operation-apparatus side communication device 73 (step S59).

Upon receiving the key-start signal, the connection target starts the engine (step S60) and transmits the engine start signal to the operation apparatus 1 (step S61), ending the starting processing.

Next, the operation system 100 executes operation processing shown in FIG. 5 (step S3). The operation processing is processing for allowing a user to operate the real work machine 20 or the virtual work machine 120. In the operation processing, information related to the command that is input to the input device 2 through an operation of the operation lever 13 or the like, namely, an operation signal, is transmitted to the connection target, and the work machine that is the connection target, namely, the operation target machine, is brought into a motion based on the command. Besides, information on the state of the operation target machine such as the inclination of the upper turning body 22 to the horizontal plane, the motion status of the wiper 26, the information on the remaining fuel and the like is transmitted to the operation apparatus 1 from the connection target.

In the operation processing, performed are a connection check for the connection between the operation apparatus 1 and the connection target and a state check for the state of the connection target, at a predetermined timing. The connection check and the state check are provided by the transmission of a request signal for requesting a communication state, an operation state and the like from the operation apparatus 1 to the connection target, and a response of the connection target to the transmission, that is, the transmission of a response signal indicating that the communication state and the operation state are normal and a response signal regarding information or failure in motion or communication, from the connection target to the operation apparatus 1. Specifically, checked are a short circuit of a power supply of a device included in the work machine 20, a disconnection abnormality, a communication error with the control device, a connection error of equipment (a camera, an encoder, or the like), and the like.

Next, the operation system 100 executes ending processing shown in FIG. 5 (step S4).

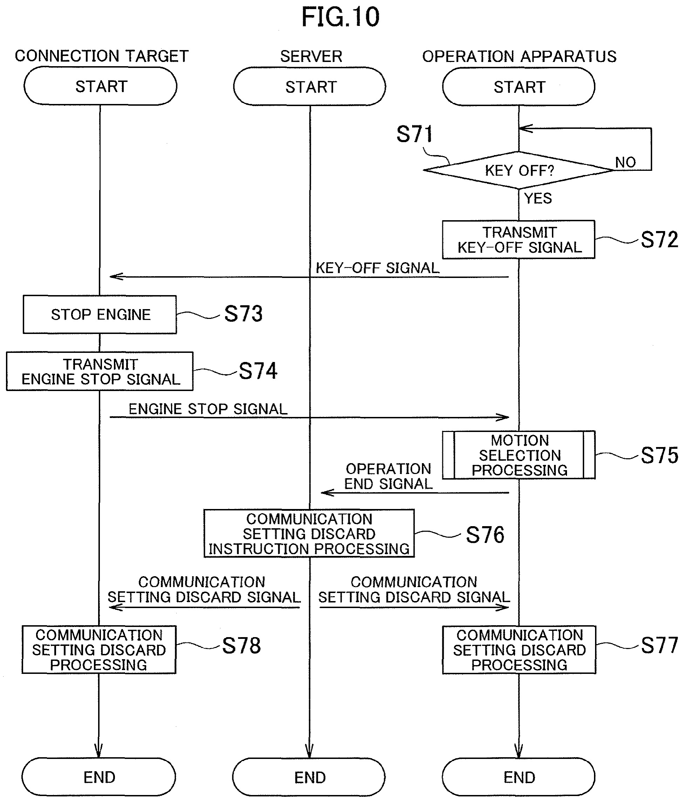

FIG. 10 is a flowchart showing the ending processing. In the ending processing, the operation-apparatus side control device 71 of the operation apparatus 1 first judges whether or not a key-off has been performed (step S71). The key-off is an operation of rotating the key inserted into the key switch 14 shown in FIG. 2 to the key-off position in order to input a command for stopping the engine 29. At the point in time when judging that the key-off has been performed (YES in step S71), the operation-apparatus side control device 71 transmits a key-off signal to the connection target through the operation-apparatus side communication device 73 (step S72).

Upon receiving the key-off signal, the connection target stops the engine 29 (step S73), and transmits an engine stop signal to the operation apparatus 1 (step S74).

Upon receiving the engine stop signal through the operation-apparatus side communication device 73, the operation-apparatus side control device 71 of the operation apparatus 1 executes motion selection processing (step S75).

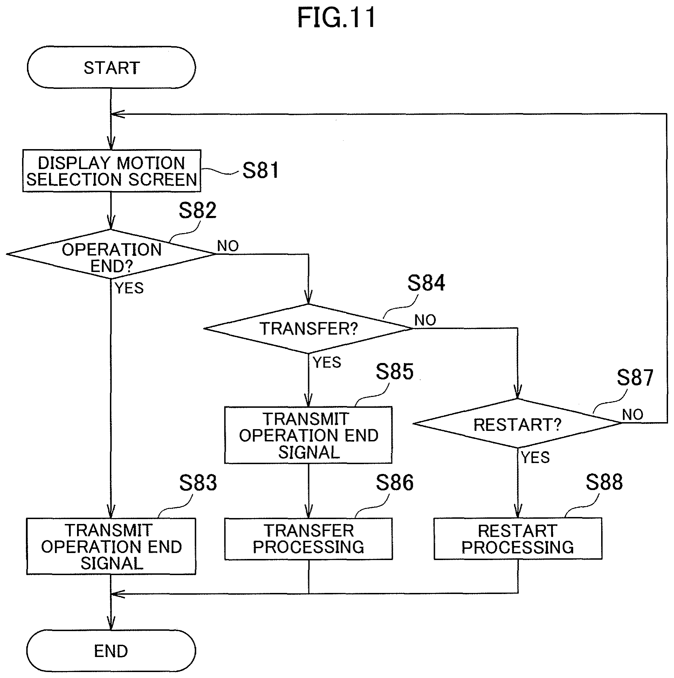

FIG. 11 is a flowchart showing the motion selection processing. In the motion selection processing, first, the operation-apparatus side control device 71 of the operation apparatus 1 makes the information terminal 16 display a motion selection screen (step S81). The motion selection screen contains a restart button, a machine transfer button and an operation ending button. The operation applied to the restart button causes a command for restarting the selected operation target machine to be input. The operation applied to the machine transfer button causes a command for the transfer from the currently selected operation target machine to another work machine to be input. The operation applied to the operation end button causes a command for ending the operation to be input.

Specifically, in the processing shown in FIG. 11, the operation-apparatus side control device 71 judges whether or not the operation end has been selected by the operation applied to the operation end button (step S82). When judging that the operation end has been selected (YES in step S82), the operation-apparatus side control device 71 transmits an operation end signal to the server 110 (step S83), ending the operation processing.

When judging that the operation end is not selected (NO in step S82), the operation-apparatus side control device 71 judges whether or not the transfer to the other work machine, that is, the change of the operation target machine, has been selected by an operation applied to the machine transfer button (step S84). When judging that the transfer has been selected (YES in step S84), the operation-apparatus side control device 71 transmits an operation end signal to the server 110 (step S85) and executes the transfer processing (step S86), ending the operation processing.

In the transfer processing, executed are steps S32 to S35 of the starting preparation processing shown in FIG. 7, step S13 and subsequent steps of the before-operation processing shown in FIG. 6. At the same time, the server 110 executes step S12 and subsequent steps of the before-operation processing shown in FIG. 6, and the connection target executes step S20 and the steps subsequent the before-operation processing shown in FIG. 6.

When judging that the transfer to the other work machine is not selected (NO in step S84), the operation-apparatus side control device 71 judges whether or not the restart has been selected through the operation applied to the restart button (step S87). When judging that the restart has been selected (YES in step S84), the operation-apparatus side control device 71 executes restart processing (step S88), ending the motion selection processing.

In the restart processing, executed are steps S32 to S35 of the starting preparation processing illustrated in FIG. 7, step S13 of the before-operation processing shown in FIG. 6, step S2 and the subsequent steps of the sequence shown in FIG. 5. At the same time, the server 110 executes step S12 of the before-operation processing shown in FIG. 6, and the connection target executes step S2 and the subsequent steps of the sequence shown in FIG. 5.

In the motion selection processing, until any one of the operation end, the transfer, and the restart is selected (NO in each of steps S82, S84, and S87), the display of the motion selection screen is continued (step S81).

In the ending processing shown in FIG. 10, when receiving the operation end signal, the server 110 executes communication setting discard instruction processing (step S76). The communication setting discard processing includes transmitting a communication setting discard signal to each of the operation apparatus 1 and the connection target.

When receiving the communication setting discard signal, the operation-apparatus side control device 71 of the operation apparatus 1 executes communication setting discard processing (step S77). The communication setting discard processing includes discarding the communication setting information having been set in the operation apparatus 1. When receiving the communication setting discard signal, the connection target also executes the communication setting discard processing (step S78). The communication setting discard processing includes discarding the communication setting information having been set to the connection target. Through the above processing, the connection between the operation apparatus 1 and the connection target is broken, and the ending processing and further the sequence shown in FIG. 5 are ended.

As described above, the operation apparatus 1 and the operation system 100 including the operation apparatus 1 according to the present embodiment allows the virtual work machine 120 in a virtual space to be operated in the virtual space where the work performed by the work machine 20 is simulated, as shown in FIG. 1, by use of at least a part of the input device 2. In summary, the user of the operation apparatus 1 can perform not only the remote operation of the real work machine 20 but also the operation of the virtual work machine 120 through the operation apparatus 1. The user, therefore, can move the virtual work machine 120 through the same operation or substantially the same operation as the remote operation of the real work machine 20. This allows the user, for example, to learn the procedure and/or method of the remote operation of the real work machine 20 through the operation of the virtual work machine 120. The user, therefore, can actually perform predetermined work through the remote operation of the real work machine 20 after practicing the operation for the predetermined work through the operation of the virtual work machine 120. The user, thus, can utilize the skill acquired in the virtual space for the operation of the real work machine 20.

As shown in FIG. 1, the communication device including the operation-apparatus side communication device 73 etc. of the operation apparatus 1 communicates with the real work machine 20 and the simulator 90 so as to allow a user to selectively perform the remote operation of the real work machine 20 and the operation of the virtual work machine 120. This enables the user both to select the operation of the virtual work machine 120 to practice predetermined work or the like and to select the remote operation of the real work machine 20 to perform actual work or the like.

As shown in FIG. 4, the operation apparatus 1 according to the embodiment is separated from the simulator 90 that provides the virtual space and simulates work performed by the work machine 20 through the movement of the virtual work machine 120 in the virtual space. This enables, for example, the sequence for the remote operation of the real work machine 20 to be the same as the sequence for the operation of the virtual work machine 120. This enables the virtual work machine 120 to be operated by use of the operation apparatus 1 with no change of the operation apparatus 1. Besides, as compared with a case where the computer constituting the operation apparatus 1 simulates the work by the work machine 20, the load of the processing of the computer is reduced.

In addition, the coincidence of the sequence for the operation of the virtual work machine 120 with the sequence for the remote operation of the real work machine 20 eliminates the necessity of changing the sequence for the operation of the virtual work machine 120, allowing the operation of the virtual work machine 120 to be easily performed with no change of the operation apparatus 1.

As shown in FIG. 4, when receiving a specific signal related to a device included in the work machine 20 from the operation apparatus 1 included in the work machine 20, the work machine 20 transmits a response signal to the specific signal to the operation apparatus 1. When receiving the specific signal from the operation apparatus 1, the simulator 90 transmits a simulation response signal corresponding to the response signal to the operation apparatus 1. Such response to the specific signal from the operation apparatus 1, that is, the transmission of the response signal or the simulation response signal, enables a user of the operation apparatus 1 to confirm the operation state of the operation system 100.

The embodiment of the present invention having been described merely illustrates examples, not intending to limit the present invention thereto, and specific configurations and the like can be appropriately changed in design. Further, the functions and effects described in the embodiments of the present invention are merely listed for the most suitable actions and effects generated from the present invention, and the actions and effects of the present invention are not limited to those described in the embodiments of the present invention.

For example, the simulator 90 may be configured to execute one selected from a plurality of simulation software prepared in advance. This enables, for example, a single simulator 90 to simulate the work performed by the plurality of work machines 20. The same applies to a case where the work by the work machine 20 is simulated by the server 110.

In the virtual space, may be disposed a dump truck different from the virtual work machine 120. In this case, it is also allowable that the imaging device 27 is disposed above the dump truck and the image in the bird's-eye view of the loading part of the dump truck captured by the imaging device 27 is displayed on the monitor 17 of the operation apparatus 1. This allows a user who performs an operation practice through the simulator 90 to refer to not only the image provided by the imaging device 27 provided in the cab 23 but also the image of the loading part of dump truck in a bird's-eye view, thereby enabling the user to easily grasp the relative position of the attachment 30 to the dump truck. For example, the user can more easily learn a sense of distance similar to that of the real work machine 20.

It is also allowable that the imaging device 27 is disposed at a position from which at least one of an overhead view and a side view of the virtual work machine 120 is possible and the monitor 17 of the operation apparatus 1 is configured to display the bird's-eye view image or the side view image of the virtual work machine 120 captured by the imaging device 27. This allows a user to visually recognize the movement of the entire attachment 30 and to easily grasp the relationship between the operation applied to the operation lever 13 etc. and the movement of the attachment 30. Thus, even if being a beginner with a low proficiency level, the user can learn an appropriate operation more quickly.

As has been described, provided are an operation apparatus allowing a skill acquired in a virtual space to be utilized for a real work machine, and an operation system including the operation apparatus.

Provided is an operation apparatus for remotely operating a work machine. The operation apparatus includes: an input device allowing a command for moving the work machine to be input to the input device by an operation of a user; and a communication device that transmits information on the command that is input to the input device to a simulator. The simulator provides a virtual space containing a virtual work machine that virtually represents the work machine in order to simulate work performed by the work machine. The communication device is configured to communicate with the simulator so as to allow the virtual work machine to be operated by use of at least a part of the input device.

The operation apparatus enables the virtual work machine to be operated, in the virtual space where work by the work machine is simulated, by use of at least a part of the input device. The operation apparatus, thus, allows not only the actual remote operation of the work machine but also the operation of the virtual work machine to be performed by use of the operation apparatus. This allows a user of the operation apparatus to operate the virtual work machine through the same operation or substantially the same operation as the remote operation of the real work machine. For example, the user can learn the procedure and/or method of the remote operation of the real work machine through the operation of the virtual work machine. Hence, the user can actually perform predetermined work by the remote operation of the real work machine after practicing the operation for the predetermined work through the operation of the virtual work machine. The user, thus, is allowed to utilize the skill acquired in the virtual space for the operation of the real work machine.

Preferably, the communication device is configured to perform communication with the work machine and the simulator so as to enable a remote operation of the work machine and an operation of the virtual work machine to be selectively performed by the operation apparatus.

The operation apparatus is preferably separated from the simulator.

This allows the sequence for the operation of the virtual work machine to be the same as the sequence for the remote operation of the work machine.

Also provided is an operation system including a work machine, an operation apparatus for remotely operating the work machine, and a simulator which provides a virtual space containing a virtual work machine which virtually represents the work machine in order to simulate work performed by the work machine. The simulator provides a virtual space containing a virtual work machine which virtually represents the work machine. The operation apparatus includes an input device allowing a command for moving the work machine to be input to the input device by an operation of a user, and a communication device that transmits information on the command that is input to the input device to a simulator. The communication device of the operation apparatus is configured to communicate with the simulator so as to allow the virtual work machine to be operated by use of at least a part of the input device.

In the operation system, it is preferable that a sequence used between the operation apparatus and the simulator for operation of the virtual work machine is the same as a sequence used between the work machine and the operation apparatus for remote operation of the work machine.

In the operation system, it is preferable that: the communication device is configured to transmit a specific signal related to a device included in the work machine to the operation apparatus and the simulator; the work machine is configured to transmit, when receiving the specific signal, a response signal to the specific signal to the communication device; and the simulator is configured to transmit, when receiving the specific signal, a simulated response signal corresponding to the response signal to the communication device.

## Claims

1. An operation apparatus for remotely operating a work machine, comprising:
an input device allowing a command for moving the work machine to be input to the input device by an operation of a user; and
a communication device that transmits information on the command input to the input device to a simulator that provides a virtual space containing a virtual work machine that virtually represents the work machine in order to simulate work performed by the work machine, wherein
the communication device is configured to communicate with the simulator so as to allow the virtual work machine to be operated by use of at least a part of the input device.

2. The operation apparatus according to claim 1, wherein the communication device is configured to perform communication with the work machine and the simulator so as to enable a remote operation of the work machine and an operation of the virtual work machine to be selectively performed by the operation apparatus.

3. The operation apparatus according to claim 1 or 2, wherein the operation apparatus is separated from the simulator.

4. The operation apparatus according to claim 3, wherein a sequence for an operation of the virtual work machine is the same as a sequence for a remote operation of the work machine.

5. An operation system comprising:
the operation apparatus according to any one of claims 1 to 4;
a simulator that provides a virtual space containing a virtual work machine that virtually represents the work machine in order to simulate work performed by the work machine, wherein
the communication device is configured to communicate with the simulator so as to allow the virtual work machine to be operated by use of at least a part of the input device.

6. The operation system according to claim 5, wherein a sequence used between the operation apparatus and the simulator for operation of the virtual work machine is the same as a sequence used between the work machine and the operation apparatus for remote operation of the work machine.

7. The operation system according to claim 5 or 6, wherein: the communication device is configured to transmit a specific signal related to a device included in the work machine to the operation apparatus and the simulator; the work machine is configured to transmit, when receiving the specific signal, a response signal to the specific signal to the communication device; and the simulator is configured to transmit, when receiving the specific signal, a simulated response signal corresponding to the response signal to the communication device.
